# EUROPÄISCHE PATENTSCHRIFT

(11) **EP 3 980 741 B1**
(45) Veröffentlichungstag und Bekanntmachung des Hinweises auf die Patenterteilung: **04.10.2023**
(21) Anmeldenummer: 20732126.6
(22) Anmeldetag: 29.05.2020
(51) Int. Cl.: G01M 3/20

(54) **DETEKTION VON SCHÄDEN MITTELS GERUCHSSENSOR**
DETECTING DAMAGE USING AN ODOUR SENSOR
DÉTECTION DE DOMMAGES AU MOYEN D'UN DÉTECTEUR D'ODEUR

(30) Priorität: 05.06.2019 DE 102019003924
(43) Veröffentlichungstag der Anmeldung: 13.04.2022
(73) Patentinhaber: KSB SE & Co. KGaA, 67227 Frankenthal (DE)
(72) Erfinder: THOME, Patrick, 67227 Frankenthal (DE)
(86) Internationale Anmeldenummer: PCT/EP2020/064965
(87) Internationale Veröffentlichungsnummer: WO 2020/245042

(56) Entgegenhaltungen:
- WO-A1-2018/064264
- DE-A1-102018 116 282

## Beschreibung

Die Erfindung betrifft ein Verfahren und System zur Detektion von Schäden an einem Lager in einem Lagerträgergehäuse eines fluidführenden Geräts in Form einer Pumpenanordnung.

In modernen fluidführenden Geräten, wird heutzutage eine Vielzahl von Sensoren verbaut, durch die der Zustand des fluidführenden Geräts zu jedem Zeitpunkt überwacht und mögliche Beschädigungen festgestellt werden können. Diese Sensoren basieren üblicherweise auf akustischen, optischen oder schwingungstechnischen Konzepten. Allerdings lassen sich nicht alle möglichen Beschädigungen einzig anhand derartiger Sensoren detektieren. So kann beispielsweise eine Änderung der Schwingung auf einen bevorstehenden Lagerschaden hinweisen. Es können jedoch auch andere Gründe für eine solche Änderung verantwortlich sein, so dass nicht mit absoluter Sicherheit eine Aussage darüber getroffen werden kann, ob ein Austausch der Lager wirklich erforderlich ist.

Ein Austausch von Bauteilen kann in der Regel nur bei einem Stillstand des fluidführenden Geräts erfolgen. Da ein solcher Stillstand für den Betreiber eines derartigen Geräts üblicherweise mit Kosten verbunden ist, sollte ein Austausch von Bauteilen nur dann vorgenommen werden, wenn ein solcher auch wirklich erforderlich ist. Durch die bisher eingesetzten Sensoren kann jedoch nicht gewährleistet werden, dass ein Stillstand des fluidführenden Geräts dann erfolgt, wenn eine solche Beschädigung tatsächlich vorliegt.

Die WO 2018/064264 A1 beschreibt ein Verfahren um mittels elektronischer Nasen die Qualität eines Reifens zu beurteilen.

Die DE 10 2018 116 282 A1 beschreibt ein Verfahren zur geruchsbasierten Überwachung von Fahrzeugkomponenten.

Aus diesem Grunde liegt der Erfindung die Aufgabe zugrunde, die Sensorik eines fluidführenden Geräts in Form einer Pumpenanordnung derart zu verbessern bzw. derart zu erweitern, dass Schäden an einem Lager in einem Lagerträgergehäuse des fluidführenden Geräts in Form einer Pumpenanordnung zuverlässiger vorhergesagt werden können.

Diese Aufgabe wird gelöst durch ein Verfahren nach Anspruch 1.

Ein solcher Geruchssensor wird üblicherweise auch als "elektronische Nase" bezeichnet. Ein derartiger Gassensor besteht aus einer Vielzahl von einzelnen Sensorelementen, deren Signale mittels mathematischer Methoden in der Auswerteeinheit analysiert werden, wobei eine Erkennung typischer Geruchsmuster bzw. Geruchsprofile erfolgt. Als Geruchsprofil ist das Verhältnis der Signalstärken der einzelnen Sensorelemente zueinander gemeint, die man sich als geometrisches Muster in der Auftragung um einen gemeinsamen Mittelpunkt herum als Stern mit unterschiedlich langen Strahlen vorstellen kann.

Als Geruchssensor kommen üblicherweise Sensoren auf der Basis halbleitender Metalloxide (MOX-Sensoren), Sensoren mit elektrisch leitenden Polymeren und Sensoren, die einen Masseneffekt verwerten, in Betracht.

Erfindungsgemäß ist das Bauteil, für das das Verfahren zur Detektion von Schäden angewandt wird, ein Lager. Bei diesen Lagern kann es sich beispielsweise um Wälzlager oder auch um Gleitlager handeln. In beiden Fällen muss das Lager eine ausreichende Menge eines Schmiermittels z.B. Öl oder Fett aufweisen. Sofern sich ein Lagerschaden anbahnt, geht dieser üblicherweise mit einer Erhöhung der Reibung innerhalb des Lagers einher. Diese Reibung führt zu einer Temperaturerhöhung des Schmiermittels, so dass auch hier geringe Mengen an Schmiermittel in Form von mikroskopischen Teilchen in die Umgebung gelangen. Somit erzeugt ein Schaden an einem Lager ebenfalls einen Geruchsstoff, der ein charakteristisches Geruchsprofil aufweist, das über Geruchssensoren erfasst werden kann.

In einer Weiterbildung der Erfindung weist die Auswerteeinheit einen Speicher auf, in dem die charakteristischen Geruchsprofile hinterlegt sind. Hierbei richtet sich die Anzahl und die Art der Geruchsprofile nach den Bauteilen bzw. nach den Geruchssensoren, die diesen Bauteilen zugeordnet sind. Sofern beispielsweise nur Lager und Gleitringdichtungen verbaut sind, ist die Hinterlegung eines charakteristischen Geruchsprofils, das auf eine Beschädigung einer Wellenkupplung hinweist, nicht erforderlich. Grundsätzlich können aber auch alle relevanten charakteristischen Geruchsprofile hinterlegt werden, so dass die Auswerteeinheit universell an unterschiedlichen fluidführenden Geräten verwendet werden kann.

Darüber hinaus ist es in einer besonders bevorzugten Ausgestaltung zweckmäßig, wenn das Ausgabesignal ein graphisches und/oder ein akustisches Signal ist. Bei einem akustischen Signal kann es sich beispielsweise um einen Warnton handeln, der kontinuierlich oder diskontinuierlich ausgegeben wird. Alternativ ist auch eine Sprachmitteilung denkbar, die auf eine konkrete Beschädigung hinweist. Ein grafisches Signal kann beispielsweise über eine Warnanzeige realisiert werden. Im einfachsten Fall handelt es sich hierbei um eine Warnlampe. Alternativ kann das Ausgabesignal auch auf einem Bildschirm, z.B. Computer oder Mobiltelefon, insbesondere Smartphone, Tablets usw. ausgegeben werden, wobei dann in vorteilhafter Weise auf die konkrete Beschädigung hingewiesen werden kann. Es ist aber auch grundsätzlich möglich, dass sowohl ein akustisches als auch ein grafisches Ausgabesignal erzeugt wird.

Erfindungsgemäß ist der zumindest eine Geruchssensor fest in dem Lagerträgergehäuse des fluidführenden Geräts in Form einer Pumpenanordnung angeordnet. Hierdurch können die Geruchssensoren gezielt dort eingesetzt werden, wo mit einer Beschädigung eines Bauteils zu rechnen ist.

Das erfindungsgemäße Verfahren kann grundsätzlich eigenständig betrieben werden. Bevorzugt wird es aber in Kombination mit anderen Überwachungssystemen verwendet. So können zusätzlich akustische, optische oder Schwingungssensoren vorgesehen sein, so dass Beschädigungen durch eine Vielzahl unterschiedlicher Sensoren erfasst werden können. Hierdurch wird die Genauigkeit und die Zuverlässigkeit deutlich erhöht.

Die Erfindung umfasst ferner ein System zur Detektion von Schäden an einem Lager in einem Lagerträgergehäuse eines fluidführenden Geräts in Form einer Pumpenanordnung gemäß Anspruch 4. Alle Merkmale, die im Zusammenhang mit dem Verfahren erwähnt werden, gelten auch für Anspruch 4.

Im Folgenden wird die Erfindung anhand eines Beispiels näher erläutert.
Fig. 1 zeigt ein fluidführendes Gerät in Form einer Pumpenanordnung, die
Fig. 2 zeigt einen schematischen Aufbau einer Vorrichtung zur Durchführung des erfindungsgemäßen Verfahrens.

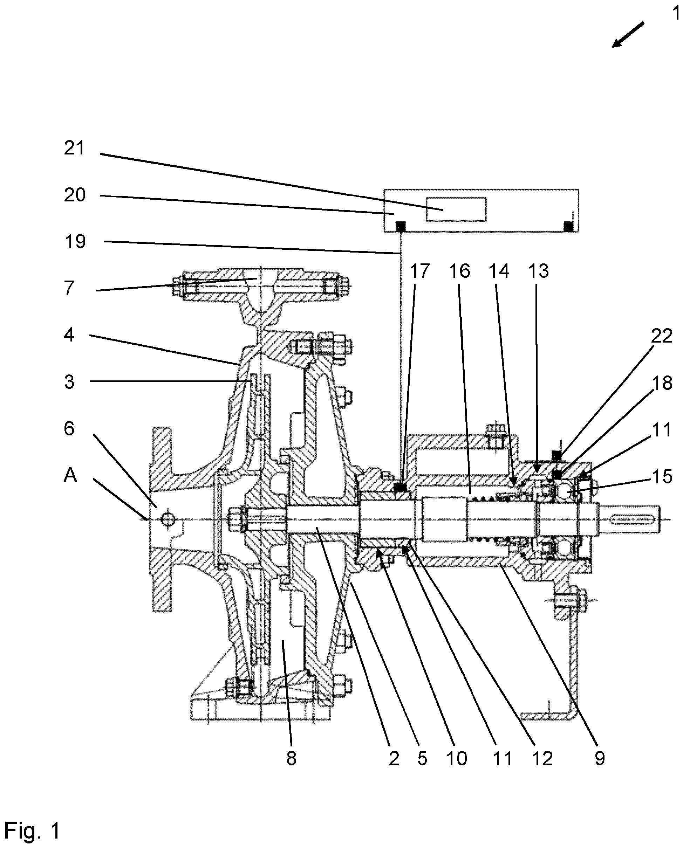

Figur 1 zeigt ein fluidführendes Gerät 1, erfindungsgemäß in Form einer Pumpenanordnung. Im Ausführungsbeispiel handelt es sich um eine einstufige Kreiselpumpe mit einer Welle 2. Die Welle 2 ist um eine sich in axialer Richtung erstreckenden Mittellängsachse A drehbar antreibbar. Die Welle 2 trägt an einem Ende ein Laufrad 3. Das Laufrad 3 ist von einem Hydraulikgehäuse 4 mit einem daran angeordneten Gehäusedeckel 5 umgeben. Das Hydraulikgehäuse 4 weist eine Einlassöffnung 6 zum Ansaugen eines Fördermediums und eine Auslassöffnung 7 zum Ausstoßen des Fördermediums auf. Der Gehäusedeckel 5 ist an der der Einlassöffnung 6 gegenüberliegende Seite des Hydraulikgehäuses 4 angeordnet.

Die Welle 2 erstreckt sich von einer durch Hydraulikgehäuse 4 und Gehäusedeckel 5 begrenzten Strömungskammer 8 durch den Gehäusedeckel 5 sowie durch ein Lagerträgergehäuse 9, welches an dem Gehäusedeckel 5 befestigt ist. Das Lagerträgergehäuse 9 weist nahe dem Gehäusedeckel 5 einen ersten Aufnahmebereich 10 auf, in dem ein zu überwachendes Bauteil 11 in Form einer Gleitringdichtungsanordnung 12 angeordnet ist. An einem zweiten, dem Gehäusedeckel 5 fernen Aufnahmebereich 13 ist ein Wellendichtungssystem 14 und ein zu überwachendes Bauteil 11 in Form eines als Wälzlager ausgebildeten Lagers 15 angeordnet. Lagerträgergehäuse 9 sowie Gleitringdichtungsanordnung 12 und Wellendichtungssystem 14 mit Lager 15 definieren eine Kammer 16

Das dem Laufrad 3 gegenüberliegende Ende der Welle 2 ist aus dem Lagerträgergehäuse 9 herausgeführt und an einer Abtriebswelle eines nicht dargestellten Motors, insbesondere eines Elektromotors, angeschlossen.

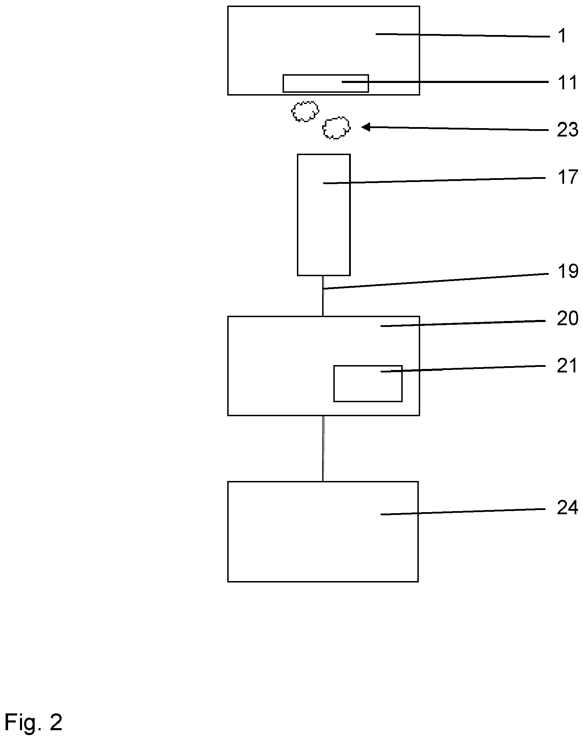

Beispielhaft für eine mögliche Anordnung von Geruchssensoren sind ein erster Geruchssensor 17 und ein zweiter Geruchssensor 18 gezeigt. Der Geruchssensor 17 ist über eine Anschlussleitung 19 mit einer Auswerteeinheit 20 verbunden. Die Auswerteeinheit 20 weist einen Speicher 21 auf. Der Geruchssensor 18 weist eine Sende- oder Sende/Empfängervorrichtung 22 auf oder ist mit einer solchen verbunden und überträgt die Daten über Funk an die Auswerteeinheit 20. Die Auswerteeinheit 20 kann nicht dargestellte Mittel aufweisen, die ein Ausgabesignal in Form eines graphischen und/oder eines akustischen Signals ermöglichen. Alternativ und/oder zusätzlich kann die Auswerteeinheit 20 ein Ausgabesignal an eine andere in der Fig. 2 gezeigten Ausgabeeinheit 24 über eine Verbindungsleitung oder über Funk weiterleiten bzw. übertragen, z.B. an einen Computer oder ein Mobiltelefon, insbesondere Smartphone, Tablet usw.

Die Fig. 2 zeigt einen schematischen Aufbau einer Vorrichtung zur Durchführung des erfindungsgemäßen Verfahrens. Das Bauteil 11 ist Teil eines fluidführenden Geräts 1 und stellt erfindungsgemäß ein Lager dar. Sofern das Bauteil 11 beschädigt wird, sendet es einen Geruchsstoff 23 aus, der mit Hilfe eines Geruchssensors 17, 18 erfasst werden kann. Der Geruchssensor 17 bzw. 18 ist unmittelbar in der Nähe des Bauteils 11 angeordnet, damit etwaige Beschädigungen frühzeitig detektiert werden können.

Sobald das Bauteil 11 einen Geruchsstoff 23 aussendet, wird dieser vom Geruchssensor 17 bzw. 18 erfasst und dessen Geruchsprofil an die Auswerteeinheit 20 übermittelt. Die Übermittlung des Geruchsprofils, kann, wie dargestellt, über die Anschlussleitung 19 oder via Funk stattfinden. Im Speicher 21 der Auswerteeinheit 20 sind eine Vielzahl charakteristischer Geruchsprofile hinterlegt. Bei diesen charakteristischen Geruchsprofilen handelt es sich um Geruchsprofile, die mit verschiedenen Beschädigungsarten in Verbindung gebracht werden können. Diese Beschädigungsarten sind unmittelbar von dem überwachten Bauteil 11 abhängig.

Die Auswerteeinheit 20 gleicht das vom Geruchssensor 17 oder 18 erfasste Geruchsprofil mit den im Speicher 21 hinterlegten charakteristischen Geruchsprofilen ab. Sofern das erfasste Geruchsprofil eines Geruchsstoffes 23 mit einem der charakteristischen Geruchsprofile übereinstimmt, wird ein Signal an eine Ausgabeeinheit 24 übermittelt, die ein Ausgabesignal erzeugt. Die Ausgabeeinheit 24 ist entweder Bestandteil der Auswerteeinheit 20 oder eine separate Einheit, die über eine Verbindungsleitung oder über Funk mit der Auswerteeinheit 20 verbunden sein kann. Bei der Ausgabeeinheit kann es sich beispielsweise um einen Computer oder ein Mobiltelefon, insbesondere Smartphone, Tablet usw. handeln.

Bei dem Ausgabesignal kann es sich beispielsweise um ein akustisches oder ein grafisches Signal handeln. Es ist aber auch grundsätzlich möglich, dass sowohl ein akustisches als auch ein grafisches Ausgabesignal erzeugt wird.

## Patentansprüche

1. Verfahren zur Detektion von Schäden an einem Lager (15) in einem Lagerträgergehäuse (9) eines fluidführenden Geräts (1) in Form einer Pumpenanordnung,
- wobei zumindest ein Geruchssensor (17, 18) ein von dem Lager (15) erzeugten Geruchsstoff (23) detektiert und ein Geruchsprofil des Geruchsstoffes an eine Auswerteeinheit (20) übermittelt,
- wobei die Auswerteeinheit (20) das Geruchsprofil mit einem oder mehreren charakteristischen Geruchsprofilen vergleicht,
- wobei ein Ausgabesignal in einer Ausgabeeinheit (24) erzeugt wird, wenn der Geruchssensor ein charakteristisches Geruchsprofil detektiert,
**dadurch gekennzeichnet, dass**
- der zumindest eine Geruchssensor (17, 18) fest in dem Lagerträgergehäuse (9) des fluidführenden Geräts (1) in Form einer Pumpenanordnung angeordnet ist.

2. Verfahren nach Anspruch 1, wobei die charakteristischen Geruchsprofile in einem Speicher (21) der Auswerteeinheit (20) gespeichert werden.

3. Verfahren nach einem der Ansprüche 1 oder 2, wobei das Ausgabesignal als ein graphisches und/oder ein akustisches Signal erzeugt wird.

4. System zur Detektion von Schäden an einem Lager (15) in einem Lagerträgergehäuse (9) eines fluidführenden Geräts (1) in Form einer Pumpenanordnung, umfassend das fluidführende Gerät (1) in Form einer Pumpenanordnung mit dem Lager (15) in dem Lagerträgergehäuse (9) der Pumpenanordnung, zumindest einen Geruchssensor (17, 18), eine Auswerteeinheit (20) und eine Ausgabeeinheit (24), wobei der zumindest eine Geruchssensor (17, 18) ausgelegt ist, ein von dem Lager (15) erzeugten Geruchsstoff (23) zu detektieren und ein Geruchsprofil des Geruchsstoffes an die Auswerteeinheit (20) zu übermitteln, wobei die Auswerteeinheit (20) ausgelegt ist, das Geruchsprofil mit einem oder mehreren charakteristischen Geruchsprofilen zu vergleichen, und wobei die Ausgabeeinheit (24) ausgelegt ist, ein Ausgabesignal zu erzeugen, wenn der Geruchssensor ein charakteristisches Geruchsprofil detektiert, **dadurch gekennzeichnet, dass** der zumindest eine Geruchssensor (17, 18) fest in dem Lagerträgergehäuse (9) des fluidführenden Geräts (1) in Form einer Pumpenanordnung angeordnet ist.

## Claims

1. Method for detecting damage to a bearing (15) in a bearing carrier housing (9) of a fluid-conducting device (1) in the form of a pump assembly,
- wherein at least one odour sensor (17, 18) detects an odorous substance (23) produced by the bearing (15) and transmits an odour profile of the odorous substance to an evaluation unit (20),
- wherein the evaluation unit (20) compares the odour profile with one or more characteristic odour profiles,
- wherein an output signal is generated in an output unit (24) if the odour sensor detects a characteristic odour profile,
**characterized in that**
- the at least one odour sensor (17, 18) is arranged fixedly in the bearing carrier housing (9) of the fluid-conducting device (1) in the form of a pump assembly.

2. Method according to Claim 1, wherein the characteristic odour profiles are stored in a memory (21) of the evaluation unit (20).

3. Method according to either of Claims 1 and 2, wherein the output signal is generated in the form of a graphic and/or an acoustic signal.

4. System for detecting damage to a bearing (15) in a bearing carrier housing (9) of a fluid-conducting device (1) in the form of a pump assembly, comprising the fluid-conducting device (1) in the form of a pump assembly with the bearing (15) in the bearing carrier housing (9) of the pump assembly, at least one odour sensor (17, 18), an evaluation unit (20) and an output unit (24), wherein the at least one odour sensor (17, 18) is designed to detect an odorous substance (23) produced by the bearing (15) and to transmit an odour profile of the odorous substance to the evaluation unit (20), wherein the evaluation unit (20) is designed to compare the odour profile with one or more characteristic odour profiles, and wherein the output unit (24) is designed to generate an output signal if the odour sensor detects a characteristic odour profile, **characterized in that** the at least one odour sensor (17, 18) is arranged fixedly in the bearing carrier housing (9) of the fluid-conducting device (1) in the form of a pump assembly.

## Revendications

1. Procédé de détection d'endommagements au niveau d'un palier (15) situé dans un boîtier de support de palier (9) d'un appareil conducteur de fluide (1) se présentant sous la forme d'un ensemble formant pompe,
- au moins un capteur d'odeur (17, 18) détectant une substance odorante (23) générée par le palier (15) et transmettant un profil d'odeur de la substance odorante à une unité d'évaluation (20),
- l'unité d'évaluation (20) comparant le profil d'odeur à un ou plusieurs profils d'odeur caractéristiques,
- un signal de sortie étant généré dans une unité de sortie (24) lorsque le capteur d'odeur détecte un profil d'odeur caractéristique,
**caractérisé en ce que**
- l'au moins un capteur d'odeur (17, 18) est disposé dans le boîtier de support de palier (9) de l'appareil conducteur de fluide (1) se présentant sous la forme d'un ensemble formant pompe.

2. Procédé selon la revendication 1, les profils d'odeur caractéristiques étant mémorisés dans une mémoire (21) de l'unité d'évaluation (20).

3. Procédé selon l'une des revendications 1 ou 2, le signal de sortie étant généré sous la forme d'un signal graphique et/ou acoustique.

4. Système de détection d'endommagements au niveau d'un palier (15) dans un boîtier de support de palier (9) d'un appareil conducteur de fluide (1) se présentant sous la forme d'un ensemble formant pompe, ledit système comprenant l'appareil conducteur de fluide (1) se présentant sous la forme d'un ensemble formant pompe pourvu du palier (15) dans le boîtier de support de palier (9) de l'ensemble formant pompe, au moins un capteur d'odeur (17, 18), une unité d'évaluation (20) et une unité de sortie (24), l'au moins un capteur d'odeur (17, 18) étant conçu pour détecter une substance odorante (23) générée par le palier (15) et pour transmettre un profil d'odeur de la substance odorante à l'unité d'évaluation (20), l'unité d'évaluation (20) étant conçue pour comparer le profil d'odeur à un ou plusieurs profils d'odeurs caractéristiques, et l'unité de sortie (24) étant conçue pour générer un signal de sortie lorsque le capteur d'odeurs détecte un profil d'odeur caractéristique, **caractérisé en ce que** l'au moins un capteur d'odeur (17, 18) est disposé de manière fixe dans le boîtier de support de palier (9) de l'appareil conducteur de fluide (1) se présentant sous la forme d'un ensemble formant pompe.
